# EUROPÄISCHE PATENTSCHRIFT

(11) **EP 1 714 197 B1**
(45) Veröffentlichungstag und Bekanntmachung des Hinweises auf die Patenterteilung: **07.04.2010**
(21) Anmeldenummer: 04765408.2
(22) Anmeldetag: 20.09.2004
(51) Int. Cl.: G05B 19/042

(54) **GERÄTETREIBER FÜR FELDGERÄTE DER PROZESSAUTOMATISIERUNGSTECHNIK**
DRIVER FOR FIELD DEVICES USED IN PROCESS AUTOMATION TECHNOLOGY
PILOTE POUR APPAREILS DE CHAMP DE LA TECHNOLOGIE D'AUTOMATISATION DES PROCESSUS

(30) Priorität: 18.09.2003 DE 10343670
(43) Veröffentlichungstag der Anmeldung: 25.10.2006
(73) Patentinhaber: Endress + Hauser Conducta Gesellschaft für Mess- und Regeltechnik mbH + Co.KG., 70839 Gerlingen (DE)
(72) Erfinder: WITTMER, Detlev, 75433 Maulbronn (DE); GEHRKE, Martin, 71384 Weinstadt (DE)
(74) Vertreter: Hahn, Christian
(86) Internationale Anmeldenummer: PCT/EP2004/010522
(87) Internationale Veröffentlichungsnummer: WO 2005/031480

(56) Entgegenhaltungen:
- US-A- 5 980 078
- US-A1- 2003 009 604
- SIMON R ET AL: "Integration of field devices using field device tool (fdt) on the basis of electronic device descriptions (EDD)" INDUSTRIAL ELECTRONICS, 2003. ISIE '03. 2003 IEEE INTERNATIONAL SYMPOSIUM ON JUNE 9-11, 2003, PISCATAWAY, NJ, USA,IEEE, Bd. 1, 9. Juni 2003 (2003-06-09), Seiten 189-194, XP010682646 ISBN: 0-7803-7912-8
- FDT JOINT INTEREST WORKING GROUP: "FDT Interface Specification Version 1.2" Mai 2001 (2001-05), FDT JOINT INTEREST GROUP , XP002330936 Gefunden im Internet: URL:http://www.fdt-jig.org/_downloads/04_2 004/FDT_Spec_V12_+_Addendum.zip> Seite 21 - Seite 30

## Beschreibung

Die Erfindung betrifft einen Gerätetreiber für Feldgeräte der Prozessautomatisierungstechnik gemäß dem Oberbegriff des Anspruchs 1.

In der Prozessautomatisierungstechnik werden vielfach Feldgeräte eingesetzt, die zur Erfassung und / oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Neben solchen Messgeräten sind auch Systeme bekannt, die außer Messwerterfassung auch weitere Aufgaben erfüllen. Zu nennen sind hier Elektrodenreinigungssysteme, Kalibriersysteme sowie Probennehmer.

Ebenfalls als Feldgeräte werden Ein-/Ausgabeeinheiten sogenannte Remote I/Os bezeichnet.

Zur Beeinflussung von Prozessvariablen dienen sogenannte Aktoren, z. B. Ventile, die den Durchfluss einer Flüssigkeit in einem Rohrleitungsabschnitt steuern oder Pumpen, die den Füllstand in einem Behälter verändern.

Eine Vielzahl solcher Feldgeräte wird von der Firma Endress + Hauser® hergestellt und vertrieben.

Häufig sind Feldgeräte über einen Feldbus (Profibus®, Foundation®-Fieldbus, HART® etc.) mit übergeordneten Einheiten z. B. Leitsystemen bzw. Steuereinheiten verbunden. Diese übergeordneten Einheiten dienen zur Prozesssteuerung, Prozessvisualisierung, Prozessüberwachung sowie zur Bedienung der Feldgeräte.

Zur Bedienung der Feldgeräte sind entsprechende Bedienprogramme (Bedientools) im Leitsystem bzw. in der Steuereinheit notwendig. Diese Bedienprogramme können eigenständig ablaufen oder aber auch in Leitsystem-Anwendungen integriert sein.

Eine eingeschränkte Bedienung von Feldgeräten ist mit herkömmlichen vielfach verwendeten Gerätebeschreibungen (Device Descriptions) möglich.

Die Druckschrift "R. Simon et al.: Integration of Field Devices using Field Device Tool (FDT) on the basis of Electronic Device Descriptions (EDD)" zeigt einen generischen Gerätetreiber, der mit Hilfe einer Device Description Datei konfiguriert wird.

Für eine vollumfängliche Bedienung der Feldgeräte müssen alle Funktionen und Parameter einschließlich der graphischen Bedienelemente dem Bedienprogramm (Bedientool) bekannt gemacht werden.

Die Gerätehersteller liefern deshalb seit kurzem zu ihren Feldgeräten Gerätetreiber z. B. DTMs (Device Type Manager), die alle Daten und Funktionen des jeweiligen Feldgeräts kapseln und gleichzeitige eine graphische Benutzeroberfläche zur Verfügung stellen.

Mit Hilfe dieser Gerätetreiber ist eine geräte- und herstellerübergreifende Bedienung von Feldgeräten mit einem Bedienprogramm möglich.

Der Trend in der Prozessautomatisierungstechnik geht immer mehr dahin, dass die Feldgeräte den speziellen Applikationen in denen sie eingesetzt werden angepasst sind und insbesondere auch dass Anwenderschnittstellen kundenspezifisch ausgelegt sind. In diesem Fall müssten nicht nur zu jedem Feldgerät sondern auch zu jeder Gerätevariante von den Geräteherstellern entsprechende Gerätetreiber erstellt werden. Diese Vielzahl der Gerätetreiber müssten bei jeder Änderungen einer Gerätesoftware entsprechend aktualisiert werden. Ältere Gerätetreiber von früheren Gerätevarianten müssten außerdem vom Gerätehersteller für längere Zeit verfügbar gehalten werden.

Die Druckschrift US 5,980,078 zeigt eine solche herkömmliche Konfiguration von Feldgeräten mit Hilfe von Funktionsblöcken.

Dies würde bei dem Gerätehersteller einen enormen Aufwand bei der Erstellung und Aktualisierung von Gerätetreibern erfordern. Mit den applikationsspezifischen Gerätetreibern wäre zusätzlich ein erheblicher Kostenaufwand verbunden.

Auch auf der Anwenderseite wäre der Einsatz applikationsspezifischen Gerätetreiber sehr aufwendig. Die neuen Gerätetreiber müssten jeweils aufwendig installiert werden. Beim Anwender bestünde die Unsicherheit, ob seine Feldgeräte die aktuellsten auf die Softwareversion des Feldgerätes abgestimmten Gerätetreiber verwenden.

Aufgabe der Erfindung ist es einen Gerätetreiber für Feldgeräte der Prozessautomatisierungstechnik anzugeben, der die oben genannten Nachteile nicht aufweist, der insbesondere einfach und kostengünstig an spezielle Applikationen anpassbar ist.

Gelöst wird diese Aufgabe durch die in Anspruch 1 angegebenen Merkmale.

Die wesentliche Idee der Erfindung besteht darin, dass sich der Gerätetreiber selbst konfiguriert. Für diese Konfiguration wird eine dem Feldgerät zugeordnete Projektierungsdatei verwendet, die normalerweise im Feldgerät abgespeichert ist und die applikationsspezifische Funktionalität des Feldgerätes bestimmt. Mit Hilfe der Projektierungsdatei werden bei der Inbetriebnahme des Feldgerätes die entsprechenden Module im Arbeitsspeicher des Feldgerätes instanziiert und verknüpft. Außerdem legen Projektierungsdateien die Konfiguration von Anwenderschnittstellen fest.

Der wesentliche Vorteil der Erfindung besteht darin, dass sich der Gerätetreiber automatisch der applikationsspezifischen Funktionalität des Feldgeräts anpasst. Der Feldgerätehersteller braucht für unterschiedliche applikationsspezifische Feldgeräte, ganze Gerätegruppen bzw. Gerätefamilien nur noch einen Gerätetreiber zur Verfügung zu stellen. Dadurch verringert sich der Aufwand für Erstellung und Aktualisierung von Gerätetreibern erheblich. Bei Änderungen der Gerätesoftware (Updates - Upgrades) müssen keine neuen Gerätetreiber erstellt werden. Der Gerätetreiber liest die der neuen Software entsprechende neue Projektierungsdatei und konfiguriert sich entsprechend selbst. In einer Weiterbildung der Erfindung ist der Gerätetreiber als DTM (device type manager) gemäß den FDT-Spezifikationen ausgebildet. Dadurch lässt sich der Gerätetreiber leicht in bekannte FDT-Frame-Applikationen (PACTware®, FieldCare® etc.) einbinden.

Die als Industriestandard geltenden FDT-Spezifikationen wurden von der PNO Profibus® Nutzerorganisation in Zusammenarbeit mit dem ZVEI (Zentralverband Elektrotechnik- und Elektronikindustrie) entwickelt. Die aktuelle FDT-Spezifikation 1.2 ist über den ZVEI erhältlich.

In einer Weiterbildung der Erfindung besteht der Gerätetreiber aus mehreren DTM-Treibermodulen, die den Modulen im Feldgerät zugeordnet sind.

Dadurch kann der Gerätetreiber leicht an grundsätzlich neue Funktionalitäten, die bisher im Feldgerät möglicherweise nicht vorgesehen waren, angepasst werden.

Die Module umfassen z. B. Reglerfunktion, Alarmfunktion, Diagnosefunktion und Bedienfunktion. Mit Hilfe derartiger Module lassen sich applikationsspezifische Feldgeräte einfach projektieren.

In einer Weiterentwicklung der Erfindung lädt sich der Gerätetreiber zur Online-Parametrierung die entsprechende Projektierungsdatei aus dem betreffenden Feldgerät selbst. So braucht der Anwender, der das Feldgerät zum ersten Mal aufruft, keine aufwendigen Installationsroutinen aufzurufen.

Neben einer Online-Bedienung ist auch eine Offline-Bedienung der Feldgeräte möglich. In diesem Fall wird die entsprechende Projektierungsdatei von einem Speichermedium (Diskette, CD-Rom) geladen.

Nachfolgend ist die Erfindung anhand den in der Zeichnung dargestellten Ausführungsbeispiele näher erläutert.

Es zeigen:
- Fig. 1: schematische Darstellung eines Netzwerks der Prozessautomatisierungstechnik mit mehreren Feldgeräten;
- Fig. 2: schematische Darstellung eines Bedienprogramms für Feldgeräte mit integriertem Gerätetreiber;
- Fig. 3: schematische Darstellung der Verschaltung von drei Modulen;
- Fig. 4: Gerätetreiber bestehend aus mehreren Treibermodulen.

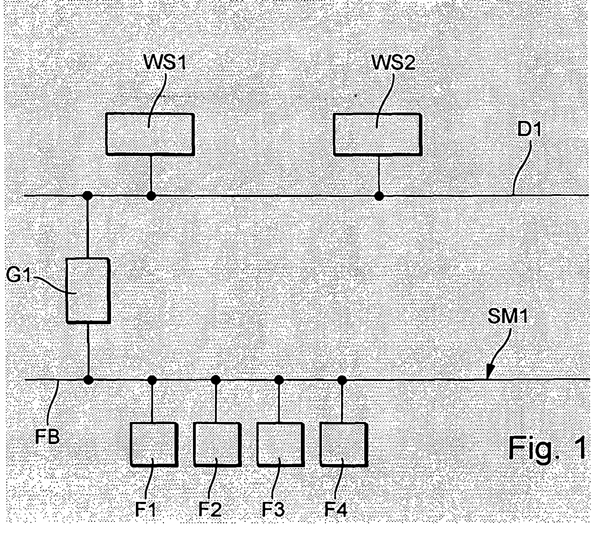

In Fig. 1 ist ein Netzwerk der Prozessautomatisierungstechnik näher dargestellt. An einen Datenbus D1 sind mehrere Rechnereinheiten (Workstations) WS1, WS2 angeschlossen. Diese Rechnereinheiten dienen als übergeordnete Einheiten (Leitsystem bzw. Steuereinheit) zur Prozessvisualisierung, Prozessüberwachung und zum Engineering sowie zum Bedienen und Überwachen von Feldgeräten. Der Datenbus D1 arbeitet z. B. nach dem Profibus® DP-Standard oder nach dem HSE (High Speed Ethernet)- Standard der Foundation® Fieldbus. Über ein Gateway 1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus, Foundation Fieldbus oder HART.

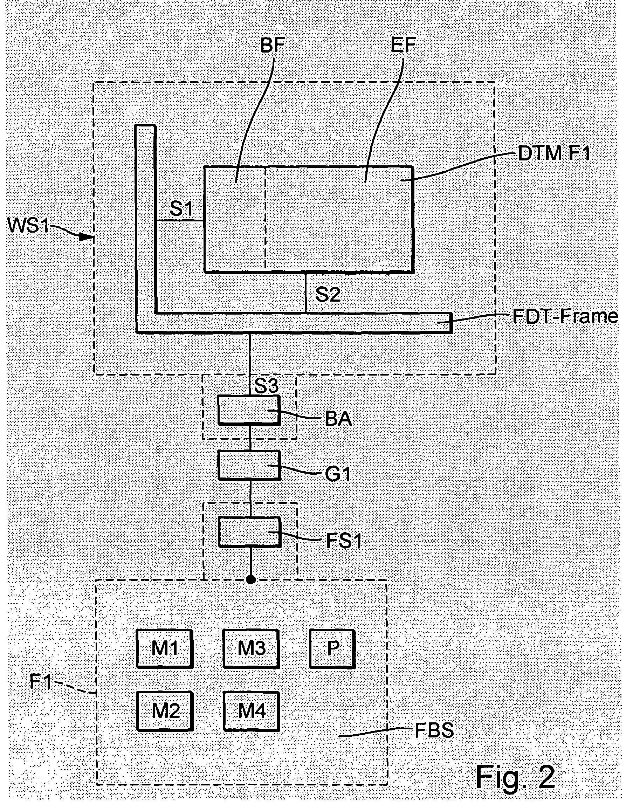

In Fig. 2 ist ein Bedienprogramm, das auf einer der Steuereinheiten WS1, WS2 bzw. auf der Bedieneinheit BE abläuft, schematisch dargestellt. Bei dem Bedienprogramm kann es sich um die Bediensoftware PACTware (PACTware Consortium e.V.) oder Fieldcare® (Firma Endress + Hauser®) handeln, die beide als Betriebssystem Microsoft Windows®, 98NT, 2000 benötigen und die als FDT-Frame-Applikation dienen. Die FDT-Frame-Applikation ist insbesondere verantwortlich für die Verwaltung der DTMs in einer Projektdatenbank (projekt database) für die Kommunikation zu den Bussystemen, für die Verwaltung des Gerätekatalogs, sowie für die Verwaltung der Benutzer und Zugriffsrechte etc..

Über verschiedene Schnittstellen S1, S2 erfolgt die Einbindung eines DTMs (hier DTMF1) in die FDT-Frame-Applikation. Der DTM, der auch als Gerätetreiber bezeichnet wird, kapselt die Daten und Funktionen des Feldgerätes F1 und benötigt als Laufzeitumgebung die FDT-Frame-Applikation. Mit Hilfe von DTMs ist eine geräte- und herstellerübergreifende Bedienung von Feldgeräten möglich. Insbesondere erlaubt der DTM Zugriff auf Geräteparameter, Gerätekonfiguration, Abruf von Diagnosedaten und Statusinformationen über eine herstellerspezifische graphische Benutzeroberfläche.

Das FDT-Konzept basiert darauf, dass in eine FDT-Frame-Applikation unterschiedliche Feldgeräte DTMs von unterschiedlichen Herstellern in einfacher Weise gebunden werden können.

Über eine Schnittstelle S3 kommuniziert die FDT-Frame-Applikation mit dem Feldgerät F1. Die softwaremäßige Verbindung erfolgt dabei über einen oder mehrere Kommunikations-DTM(s). Hardwaremäßig erfolgt die Verbindung über eine Busanschaltung BA, den Datenbus D1, das Gateway G1, den Feldbus FB und die am Feldgerät vorgesehenen Schnittstelle FS1.

Nachfolgend ist die Funktionsweise der Erfindung näher erläutert. Die Erfindung basiert im wesentlichen auf der Projektierungsdatei, die die applikationsspezifische Funktionalität des Feldgerätes festlegt. Diese Projektierungsdatei wird bei der Projektierung des Feldgerätes erstellt. Dabei werden mit einem entsprechenden Entwicklungswerkzeug vordefinierte Module z. B. per Drag and Drop ausgewählt und miteinander verknüpft. Die Module weisen hierfür entsprechende Anschlusspunkte für Ein / Ausgänge auf, die entsprechend dem gewünschten Datenstrom im Feldgerät miteinander verknüpft werden müssen.

Ein Ausgang kann dabei mit mehreren Eingängen verknüpft werden, ein Eingang aber nur von einem Ausgang gespeist werden. Bei den Modulen kann es sich z. B. um Funktionsblöcke, wie sie in der IEC-Norm 61131-3 spezifiziert sind, handeln (z. B. um Reglerblock, Alarmblock, Analoginput -Block bzw. Diskret-Output-Block).

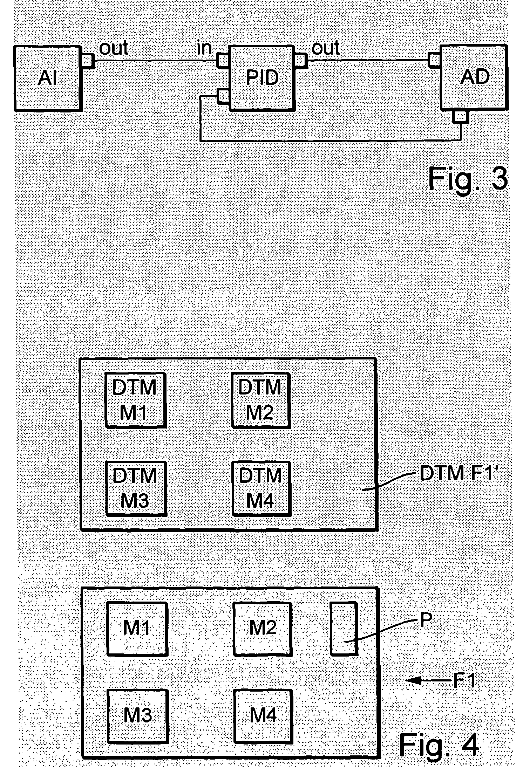

In Fig. 3 ist die Verschaltung von 3 Funktionsblöcken Al, PID und AO schematisch dargestellt. Neben der reinen Messwertverarbeitung sind auch Module für die Anwenderschnittstelle am Feldgerät vorgesehen.

Mit Hilfe der Projektierungsdatei P ist es deshalb möglich ohne die Generierung von neuem Quellcode ein applikationsspezifisches Feldgerät bereitzustellen. Wie der Betrieb eines Feldgerätes mit Hilfe derartige Module erfolgt ist in der eigenen Anmeldung "Messeinrichtung für die Prozesstechnik und Betriebsverfahren für eine Messeinrichtung" angemeldet am 13.04.2002 beim DPMA (AZ: 10216331.6) näher beschrieben. Bezüglich des Offenbarungsgehalts wird auf diese Anmeldung explizit verwiesen.

Die Projektierungsdatei P wird im Feldgerät abgespeichert und beim Inbetriebnehmen des Feldgerätes geladen. Sie instanziiert die entsprechenden Module und deren Verknüpfungen und konfiguriert die Anwenderschnittstelle.

Zur Offline Bedienung von Feldgeräten kann die entsprechenden Projektierungsdateien auch von einem Speichermedium (z.B. Diskette, CD-ROM) geladen werden.

Nachfolgend ist der wesentliche Aspekt der Erfindung näher erläutert.

Mit Hilfe der Projektierungsdatei P, die die applikationsspezifische Funktionalität des Feldgerätes festlegt, konfiguriert sich der Gerätetreiber für dieses Feldgerät selbst. Dies ist im Folgenden für das Feldgerät F1 erklärt. Ein generischer Gerätetreiber, der für mehrere Feldgeräte geeignet ist, wird in das Bedienprogramm geladen. Dieser generische Gerätetreiber besitzt vor seiner Konfigurierung nur eine eingeschränkte Basisfunktionalität, die ihm u.a. das Auslesen der Projektierungsdatei P aus dem Feldgerät F1 über einen Kommunikations- DTM bzw. das Laden von einem separaten Speichermedium ermöglicht. Diese Basisfunktionalität ist in Fig. 2 durch den Bereich BF dargestellt.

Erst durch das Laden und Ausführen der Projektierungsdatei P in der Steuereinheit, wird aus dem generischen Gerätetreiber ein gerätespezifischer Gerätetreiber DTMF1, mit dem dem Bedienprogramm und damit dem Anwender die volle Funktionalität des Feldgerätes F1 über den Gerätetreiber DTMF1 zur Verfügung steht. Die erweiterte Funktionalität, die mit Hilfe der Projektierungsdatei P erzeugt wird, ist in Fig. 2 durch den Bereich EF dargestellt.
Mit Hilfe der Projektierungsdatei P wird aus einem generischen Gerätetreiber, der für verschiedene Feldgeräte verwendbar ist, ein gerätespezifischer Gerätetreiber DTMF1.

In Fig. 4 ist eine alternative Ausgestaltung der Erfindung dargestellt, bei der der Gerätetreiber aus mehreren Treibermodulen aufgebaut ist. Hierbei entspricht jedem Modul M1, M2, M3, M4 im Feldgerät ein entsprechendes DTM-Treibermodul DTM1, DTM2, DTM3, DTM4. Entsprechend der im Feldgerät vorgesehenen Module und deren Verknüpfungen werden die entsprechenden DTMs, die in einem Speicher der Steuereinheit abgelegt sind, durch die Projektierungsdatei P' geladen und miteinander verknüpft.

Die Erfindung ermöglicht es aus einem generischen Gerätetreiber DTM, der für verschiedene Feldgeräte eingesetzt werden kann, einen gerätespezifischen Gerätetreiber zu erzeugen.

## Patentansprüche

1. Verfahren zum Erzeugen eines feldgerätespezifischen Gerätetreibers (DTMF1) für ein Feldgerät (F1) der Prozessautomatisierungstechnik, das mit einer Steuereinheit (WS1) verbunden ist, wobei ein generischer Gerätetreiber (BF), der eine eingeschränkte Basisfunktionalität aufweist und der für unterschiedliche Feldgeräte (F1, F2, F3, ....) geeignet ist, in die Steuereinheit (WS1) geladen wird, **dadurch gekennzeichnet, dass** eine Projektierungsdatei (P), die eine applikationsspezifische Funktionalität des Feldgerätes (F1) festlegt, bei der Projektierung des Feldgeräts (F1) erstellt wird, indem mit einem entsprechenden Entwicklungswerkzeug vordefinierte Module bzw. Funktionsblöcke ausgewählt und über entsprechende Anschlusspunkte für Ein-/Ausgänge, die dem gewünschten Datenstrom im Feldgerät (F1) entsprechen, miteinander verknüpft werden, wobei die Projektierungsdatei (P) mittels des generischen Gerätetreibers (BF) bei Inbetriebnehmen des Feldgeräts (F1) in die Steuereinheit (WS1) geladen wird, und wobei der feldgerätespezifische Gerätetreiber (DTMF1) mit Hilfe des generischen Gerätetreibers (BF) und der Projektierungsdatei (P) konfiguriert wird.

2. Verfahren nach Anspruch 1,
wobei der generische Gerätetreiber (BS) bzw. der Gerätetreiber (DTM) als Gerätetreiber (DTM) entsprechend den FDT-Spezifikationen ausgestaltet wird.

3. Verfahren nach einem der Ansprüche 1 oder 2,
wobei die Projektierungsdatei (P) zur Online-Bedienung des Feldgeräts (F1) aus dem Feldgerät (F1) in die Steuereinheit (WS1) geladen wird.

4. Verfahren nach einem der Ansprüche 1 oder 2,
wobei die Projektierungsdatei (P) zur Offline-Bedienung des Feldgeräts (F1) von einem Speichermedium in die Steuereinheit (WS1) geladen wird.

5. Verfahren nach Anspruch 1 oder 2,
wobei der Gerätetreiber (DTM) aus mehreren Treibermodulen (DTM1, DTM2, DTM3, DTM4) aufgebaut ist, und wobei jedem Treibermodul (DTM1, DTM2, DTM3, DTM4) ein entsprechendes Teilmodul (M1, M2, M3, M4) im Feldgerät (F1) zugeordnet ist, und wobei die applikationsspezifische Funktionalität des Feldgeräts von der Projektierungsdatei (P) bestimmt wird,
die das Instanziieren und Verknüpfen von Modulen (M1, M2 ,M3, M4) im Feldgerät (F1) bewirkt.

6. Verfahren nach Anspruch 5,
wobei die Module (M1, M2, M3, M4) im Feldgerät (F1) Funktionsblöcke sind.

7. Verfahren nach Anspruch 5 oder 6,
wobei die Module (M1, M2, M3, M4) Regierfunktionen, Alarmfunktionen, Diagnosefunktionen und Bedienfunktionen umfassen.

## Claims

1. Method for creating a field device-specific device driver (DTMF1) for a field device (F1) used in process automation, which is connected to a control unit (WS1), whereby a generic device driver (BF) - which has limited basic functions and is suitable for different field devices (F1, F2, F3 etc.) - is uploaded to the control unit (WS1), **characterized in that** a planning file (P) specifying an application-specific function of the field device (F1) is created when planning the field device (F1) by selecting predefined modules or function blocks with an appropriate development tool and interconnecting them via appropriate connection points for inputs/outputs that correspond to the desired data stream in the field device (F1), whereby the planning file (P) is uploaded to the control unit (WS1) by means of the generic device driver (BF) when commissioning the field device (F1), and whereby the field device-specific device driver (DTMF1) is configured using the generic device driver (BF) and the planning file (P).

2. Method as per Claim 1, whereby the generic device driver (BS) or the device driver (DTM) is designed as a device driver (DTM) in accordance with FDT specifications.

3. Method as per Claim 1 or 2, whereby the planning file (P) for the online operation of the field device (F1) is uploaded from the field device (F1) to the control unit (WS1).

4. Method as per Claim 1 or 2, whereby the planning file (P) for the offline operation of the field device (F1) is uploaded from a storage medium to the control unit (WS1).

5. Method as per Claim 1 or 2, whereby the device driver (DTM) is made up of several driver modules (DTM1, DTM2, DTM3, DTM4), and whereby an appropriate submodule (M1, M2, M3, M4) in the field device (F1) is assigned to each driver module (DTM1, DTM2, DTM3, DTM4), and whereby the application-specific function of the field device is determined by the planning file (P) which causes instantiation and linking of the modules (M1, M2, M3, M4) in the field device (F1).

6. Method as per Claim 5, whereby the modules (M1, M2, M3, M4) in the field device (F1) are function blocks.

7. Method as per Claim 5 or 6, whereby the modules (M1, M2, M3, M4) comprise control functions, alarm functions, diagnostic functions and operating functions.

## Revendications

1. Procédé destiné à la création d'un pilote d'appareil (DTMF1) spécifique à l'appareil de terrain pour un appareil de terrain (F1) de la technique d'automatisation des process, qui est relié avec une unité de commande (WS1), un pilote d'appareil générique (BF), qui présente une fonctionnalité de base limitée et qui convient pour différents appareils de terrain (F1, F2, F3,...), étant chargé dans l'unité de commande (WS1), **caractérisé en ce qu'**un fichier de configuration (P), qui définit une fonctionnalité spécifique à l'application de l'appareil de terrain (F1), est créé lors de la configuration de l'appareil de terrain (F1), **en ce que** des modules ou des blocs de fonction prédéfinis sont sélectionnés à l'aide d'un outil de développement et interconnectés par le biais de points de raccordement pour entrées/sorties correspondants, qui correspondent au flux de données souhaité au sein de l'appareil de terrain (F1), le fichier de configuration (P) étant chargé dans l'unité de commande (WS1) au moyen du pilote d'appareil générique (BF) lors de la mise en service de l'appareil de terrain (F1), et le pilote d'appareil (DTMF1) spécifique à l'appareil de terrain étant configuré à l'aide du pilote d'appareil générique (BF) et du fichier de configuration (P).

2. Procédé selon la revendication 1,
pour lequel le pilote d'appareil générique (BS) ou le pilote d'appareil (DTM) est conçu en tant que pilote d'appareil (DTM) conforme aux spécifications FTD.

3. Procédé selon l'une des revendications 1 ou 2,
pour lequel le fichier de configuration (P) destiné à l'utilisation en ligne de l'appareil de terrain (F1) est chargé depuis l'appareil de terrain (F1) dans l'unité de commande (WS1).

4. Procédé selon l'une des revendications 1 ou 2,
pour lequel le fichier de configuration (P) destiné à l'utilisation hors ligne de l'appareil de terrain (F1) est chargé depuis le support d'information dans l'unité de commande (WS1).

5. Procédé selon la revendication 1 ou 2,
pour lequel le pilote d'appareil (DTM) est constitué à base de plusieurs modules pilotes (DTM1, DTM2, DTM3, DTM4), et pour lequel un module partiel (M1, M2, M3, M4) est attribué à chaque module pilote (DTM1, DTM2, DTM3, DTM4) dans l'appareil de terrain, et pour lequel la fonctionnalité spécifique à l'application de l'appareil de terrain est définie par le fichier de configuration (P), qui déclenche l'instanciation et l'interconnexion de modules (M1, M2, M3, M4) dans l'appareil de terrain (F1).

6. Procédé selon la revendication 5,
pour lequel les modules (M1, M2, M3, M4) sont des blocs de fonction au sein de l'appareil de terrain (F1).

7. Procédé selon la revendication 5 ou 6,
pour lequel les modules (M1, M2, M3, M4) comprennent des fonctions de gestion, fonctions d'alarme, fonctions de diagnostic et fonctions de commande.
